# FASCICULE DE BREVET EUROPEEN

(11) **EP 0 422 995 B1**
(45) Date de publication et mention de la délivrance du brevet: **25.05.1994**
(21) Numéro de dépôt: 90402748.9
(22) Date de dépôt: 04.10.1990
(51) Int. Cl.: A23B 7/152

(54) **Procédé de traitement de conservation de produits alimentaires végétaux frais**
Behandlungsverfahren zur Konservierung von frischen pflanzlichen Lebensmitteln
Process for preserving fresh vegetal food products

(30) Priorité: 05.10.1989 FR 8913015; 31.07.1990 FR 9009738
(43) Date de publication de la demande: 17.04.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fath, Daniel, F-75005 Paris (FR); Soudain, Pierre, F-75015 Paris (FR); Bordes, Magdeleine, F-78000 Versailles (FR)
(74) Mandataire: Le Moenner, Gabriel

(56) Documents cités:
- EP-A- 0 289 777
- FR-A- 1 514 926
- FR-A- 1 582 927
- US-A- 3 335 014

## Description

La présente invention concerne les procédés de traitement de conservation, sous atmosphère gazeuse de traitement, de produits alimentaires végétaux frais, plus particulièrement de fruits et de légumes.

Par "produits végétaux frais", on entend des produits fraîchement récoltés et non traités, à l'exception d'opérations de nettoyage et, le cas échéant, d'une simple séparation en morceaux.

Les traitements gazeux, généralement associés au froid, qui s'appliquent aux différentes espèces fruitières et légumières pour optimiser leur survie après récolte sont actuellement très diversifiés et mettent généralement en oeuvre de l'azote, du dioxyde de carbone, de l'oxygène, du monoxyde de carbone ou de l'anhydride sulfureux.

On a par ailleurs proposé d'utiliser des mélanges de protoxyde d'azote et d'oxygène pour le traitement de produits alimentaires carnés et de produits laitiers.

Le document FR-A-1.582.927 décrit l'élaboration et le maintien, dans une installation à recirculation de gaz, d'une atmosphère de conservation comprenant de 50 à 90 % de protoxyde d'azote, impérativement 6 à 20 % d'oxygène et une faible teneur en gaz carbonique.

Le document EP-A-0.289.777 décrit un procédé de conservation dans un emballage étanche où, avant enfermement des produits dans l'emballage puis refroidissement ultérieur, l'emballage est balayé par un mélange gazeux contenant entre 5 et 50 % d'oxygène et une faible quantité d'hélium ou d'argon.

La conservation des produits alimentaires végétaux frais pose des problèmes particuliers tenant notamment à la respiration de ces derniers, à leur émission éthylénique naturelle et à leur propension à être attaqués par de nombreuses souches fongiques. D'autre part, en particulier pour les fruits, la conservation des qualités organoleptiques et l'aspect extérieur sont des paramètres très importants pour les consommateurs.

La présente invention a pour objet de proposer de nouveaux procédés de traitement sous atmosphère gazeuse de végétaux alimentaires frais, de faibles coûts de revient, faciles à mettre en oeuvre et permettant une parfaite conservation, pendant une durée accrue, des qualités organoleptiques, de texture et d'apparence de ces produits.

Selon un aspect de l'invention, le procédé de traitement et de conservation comprend une étape initiale où les produits sont placés, à température réfrigérée, c'est-à-dire comprise en général entre 0°C et 20°C, sous une pression comprise entre 0,5 et 3 x 10⁵ Pa, dans une atmosphère gazeuse contenant initialement de 10 à 100 % d'argon, entre 0 et 50 % d'oxygène, le complément éventuel étant constitué par un gaz inerte, pendant une durée supérieure à une heure.

Selon un autre aspect de l'invention, le procédé comprend une étape initiale où les produits sont placés, à température réfrigérée, sous une pression comprise entre 0,5 et 3 x 10⁵ Pa, dans une atmosphère gazeuse contenant initialement au moins 95 % de protoxyde d'azote, ou d'argon, ou d'un mélange des deux, les produits étant placés et maintenus, à température réfrigérée et à pression ambiante, sous une telle atmosphère dans un emballage comportant une paroi semi-perméable.

Selon un autre aspect de l'invention, le procédé comprend une étape initiale où les produits sont placés, à température réfrigérée, sous une pression comprise entre 0,5 et 3 x 10⁵ Pa, dans une première atmosphère gazeuse contenant intialement de 10 à 100 % de protoxyde d'azote ou d'argon, ou d'un mélange des deux, et exempte d'oxygène, pendant une durée de 1 heure à 7 jours, suivie d'une seconde étape où les produits sont maintenus pendant au moins 12 heures, à température réfrigérée, dans une deuxième atmosphère contenant de 2 à 20 % d'oxygène.

Selon un autre aspect de l'invention, le procédé comprend l'étape de placer les produits, à une température positive inférieure à 20°C, dans une enceinte comprenant une paroi semi-perméable et contenant une atmosphère gazeuse constituée initialement de 95 à 100 % de protoxyde d'azote, de 0 à 5 % d'oxygène, le complément éventuel étant constitué d'un gaz inerte.

Selon un autre aspect de l'invention, le procédé comprend l'étape de placer les produits, à une température positive inférieure à 20°C, dans une enceinte étanche aux gaz contenant un mélange gazeux constitué initialement de 70 % de protoxyde d'azote et de 30 % d'oxygène.

La Demanderesse a constaté que le protoxyde d'azote et l'argon possédaient des propriétés intrinsèques remarquables, complémentant efficacement une anoxie temporaire, sur la conservation des végétaux frais, le retardement des processus de maturation, reflété de façon spectaculaire par le retardement de la synthèse d'éthylène, sur la préservation de la texture des produits, ainsi qu'une action fongistatique très marquée.

La diversité et la complémentarité de ces différents effets autorisent, selon les produits considérés et les durées de conservation attendues, la mise en oeuvre de traitements en mode continu, où l'atmosphère de traitement initiale est maintenue identique de façon contrôlée ou progressivement modifiée, de façon évolutive, pendant toute la durée de la conservation, ou de traitements en mode discontinu, en tirant profit de l'effet surprenant de rémanence du traitement de la première étape en plaçant ultérieurement les produits ainsi préalablement traités dans une atmosphère différente, contenant de l'oxygène et pouvant être simplement l'air ambiant, l'effet de rémanence pouvant être réactivé en réappliquant ultérieurement aux produits au moins un traitement conformément à la première étape.

Dans la première approche (traitement en mode continu), on peut ainsi mettre en oeuvre un processus de contrôle pendant l'ensemble du traitement de l'atmosphère de traitement où cette dernière est constituée, au moins initialement de 10 à 100 %, typiquement au plan industriel de 50 à 80 % de protoxyde d'azote ou d'argon, ou d'un mélange des deux, de 2 à 20 %, typiquement de 15 à 20 % d'oxygène, le complément éventuel étant constitué d'un gaz inerte au sens de la présente invention, c'est-à-dire de l'azote, du dioxyde de carbone ou un autre gaz rare ou leurs mélanges. La pression de l'atmosphère gazeuse de traitement est comprise entre 0,5 et 3x10⁵ Pa, typiquement au plan industriel de 1x10⁵ Pa, la température étant maintenue à la valeur minimale admissible par le produit végétal considéré soit, en général, entre 1°C et 17°C. Egalement selon le type de produit végétal concerné, la durée du traitement est comprise entre environ 2 jours pour les espèces très fragiles, comme les framboises, et plus d'un mois pour les espèces moins fragiles, comme les tomates.

On peut citer ainsi, à titre d'exemple, la conservation optimale de tomates dans un état de maturation précoce pendant plus de 5 semaines à la température de 12°C sous une atmosphère constituée d'environ 80 % de protoxyde d'azote et de 20 % d'oxygène à la pression atmosphérique.

Le processus continu peut également être mis en oeuvre avec une évolution pré-établie de l'atmosphère gazeuse dans une seconde phase, dans des conteneurs ou des emballages étanches aux gaz ou, au contraire, comportant une paroi semi-perméable aux gaz. Dans le premier cas (emballage étanche), où l'on met à profit la respiration des produits végétaux pour consommer une partie de l'oxygène de l'atmosphère initiale et la production corrélative de dioxyde de carbone, la constitution du mélange gazeux initial est la suivante de 20 à 90 %, typiquement au plan industriel de 70 à 80 % de protoxyde d'azote ou d'argon, ou d'un mélange des deux, de 10 à 50 %, typiquement de 20 à 30 % d'oxygène, le complément étant constitué d'un gaz inerte comme défini plus haut.

A titre d'exemples de cette technique, susceptible d'être mise en oeuvre dans des conteneurs industriels ou dans des emballages individuels à film imperméable, on peut citer la conservation de melons en tranches pendant au moins 18 jours à 4°C sous une atmosphère gazeuse à pression atmosphérique constituée initialement de 80 % de protoxyde d'azote et de 20 % d'oxygène, ou la conservation, pendant au moins 15 jours, de cerises (Burlat ou Starkins) à 4°C sous une atmosphère gazeuse à pression atmosphérique constituée initialement de 70 % de protoxyde d'azote et de 30 % d'oxygène.

Dans le second cas, où la paroi semi-perméable autorise la pénétration progressive d'oxygène et l'extraction parallèle du dioxyde de carbone produit, on utilise une atmosphère gazeuse de traitement constituée initialement de 10 à 100 %, de préférence de 50 à 100 % et, industriellement, de 95 à 100 % de protoxyde d'azote, d'argon ou d'un mélange des deux, de 0 à 20 %, typiquement de 0 à 5 % d'oxygène, le complément éventuel étant constitué d'un gaz inerte.

A titre d'exemples de cette technique, on peut citer la conservation de melons dans un emballage individuel avec un film semi-perméable en polypropylène orienté, tel que celui commercialisé sous l'appellation "MG 35" par la Société ICI, pendant plus de 12 jours, à la température de 6°C et à la pression atmosphérique avec une atmosphère gazeuse initiale constituée de 100 % de protoxyde d'azote, ou la conservation de framboises dans des cageots placés sur une palette enveloppée d'un sac en film de polyéthylène basse densité, pendant au moins 10 jours à une température de 2°C et à la pression atmosphérique avec une atmosphère gazeuse initiale constituée de 100 % de protoxyde d'azote.

La Demanderesse a également mis en évidence un avantage additionnel du maintien, pendant la durée de conservation, des végétaux dans une atmosphère contenant de l'argon et/ou plus particulièrement du protoxyde d'azote, à savoir une propriété surprenante de ces gaz à accélérer la cicatrisation des végétaux, en particulier des fruits climactériques, concourant ainsi à diminuer grandement, voire à supprimer, les attaques fongiques.

Le processus discontinu selon la seconde approche, exploitant l'effet de rémanence susmentionné, consiste à placer pendant une durée limitée les produits dans une atmosphère sensiblement exempte d'oxygène et contenant de 10 à 100 %, typiquement de 50 à 100 %, et de préférence entre 95 et 100 % de protoxyde d'azote ou d'argon, ou d'un mélange des deux, le complément éventuel étant constitué d'un gaz inerte. La durée du pré-traitement, à la même température réfrigérée que précédemment et à une pression comprise entre 0,5 et 3x10⁵ Pa, est comprise, selon la concentration du gaz de traitement et sa pression, entre 1 heure, pour les fruits à très forte respiration, comme la banane, et environ 7 jours, pour les fruits à faible respiration, comme la fraise, la durée de cette première phase étant typiquement entre 12 heures et 48 heures. A la fin de cette première phase, les produits sont placés dans une ambiance gazeuse déterminée contenant cette fois entre 2 et 20 %, typiquement entre 10 et 20 % d'oxygène introduit dans l'atmosphère pré-existante, par exemple à l'aide d'une membrane semi-perméable, ou plus simplement par simple mise à l'air libre,

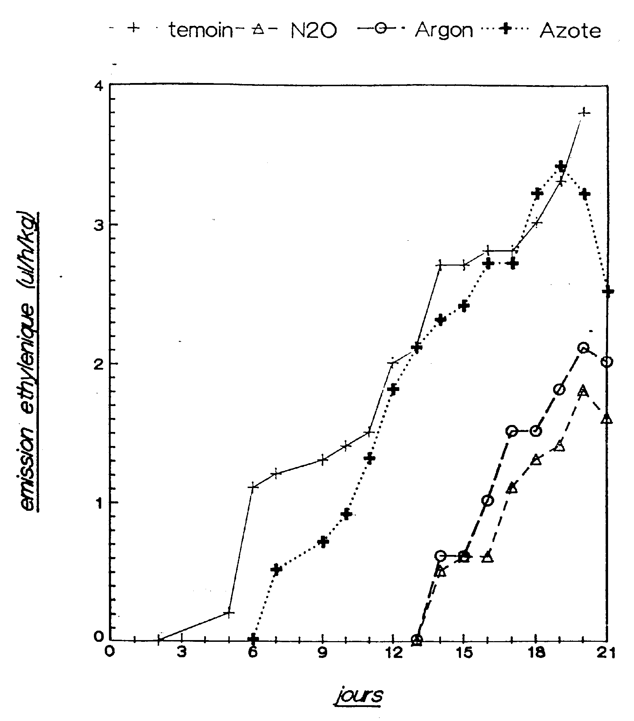

A titre d'exemple des effets remarquables de cette technique, la figure unique représente les émissions éthyléniques de tomates ayant subi un pré-traitement pendant 48 heures dans une atmosphère constituée initialement de 100 % d'argon ou de protoxyde d'azote puis remises à l'air libre, comparées à un pré-traitement similaire avec de l'azote et un échantillon témoin sans pré-traitement. On constate que, par rapport à un simple retard de l'ordre de 3 jours de l'émission éthylénique avec l'azote, le pré-traitement selon l'invention, non seulement entraîne un retard de 11 jours dans le démarrage de la synthèse d'éthylène mais limite considérablement cette dernière dans les jours suivants. L'émission éthylénique est similairement bloquée par un pré-traitement identique au protoxyde d'azote ou à l'argon pendant 15 jours pour les kiwis. Il convient de noter ici que l'émission éthylénique est un paramètre significatif de l'évolution des processus de maturation en général, ce qui démontre donc l'efficacité du procédé selon l'invention pour la conservation des fruits et légumes.

Comme autre exemple, on peut également citer le pré-traitement de cerises à 4°C pendant 12 heures sous une atmosphère à pression atmosphérique constituée initialement de 100 % de protoxyde d'azote ou d'argon, autorisant ensuite une conservation, toujours à 4°C, à l'air libre pendant au moins 16 jours permettant, à la suite, de conserver pendant au moins 4 jours les cerises en parfait état à la température ambiante cette fois, par exemple sur un étal.

Selon les durées de conservation recherchées et le type de produits considérés, selon un aspect de l'invention, la première étape de pré-traitement peut être répétée sensiblement à l'identique au moins une fois après mise à l'air libre temporaire des produits pré-traités, par exemple au bout de 12 jours pour les tomates, ce qui retarde d'autant le processus de maturation indésirée des produits.

## Revendications

1. Procédé de traitement de conservation de produits alimentaires végétaux frais, comprenant une étape initiale où les produits sont placés, à température réfrigérée, sous une pression comprise entre 0,5 et 3 x 10⁵ Pa, dans une atmosphère gazeuse contenant initialement de 10 à 100 % d'argon, entre 0 et 50 % d'oxygène, le complément éventuel étant un gaz inerte, pendant une durée supérieure à une heure.

2. Procédé selon la revendication 1, dans lequel l'atmosphère initiale comprend de 2 à 20 % d'oxygène et est maintenue pendant ladite durée, à pression ambiante.

3. Procédé selon la revendication 2, dans lequel l'atmosphère initiale comprend entre 50 et 80 % d'argon et entre 15 et 20 % d'oxygène.

4. Procédé de traitement de conservation de produits alimentaires végétaux frais, comprenant une étape initiale où les produits sont placés, à température réfrigérée, sous une pression comprise entre 0,5 et 3 x 10⁵ Pa, dans une atmosphère gazeuse contenant initialement au moins 95 % de protoxyde d'azote, ou d'argon, ou d'un mélange des deux, les produits étant placés et maintenus, à température réfrigérée et à pression ambiante, sous une telle atmosphère dans un emballage comportant une paroi semi-perméable.

5. Procédé de traitement de conservation de produits alimentaires végétaux frais comprenant une étape initiale où les produits sont placés, à température réfrigérée, sous une pression comprise entre 0,5 et 3 x 10⁵ Pa, dans une première atmosphère gazeuse contenant intialement de 10 à 100 % de protoxyde d'azote ou d'argon, ou d'un mélange des deux, et exempte d'oxygène, pendant une durée de 1 heure à 7 jours, suivie d'une seconde étape où les produits sont maintenus pendant au moins 12 heures, à température réfrigérée, dans une deuxième atmosphère contenant de 2 à 20 % d'oxygène.

6. Procédé selon la revendication 5, dans lequel la première atmosphère gazeuse contient de 50 à 100 % de protoxyde d'azote et/ou d'argon.

7. Procédé selon la revendication 6, dans lequel la première atmosphère gazeuse contient au minimum 95 % de protoxyde d'azote et/ou d'argon.

8. Procédé selon la revendication 7, dans lequel la deuxième atmosphère gazeuse contient entre 10 et 20 % d'oxygène.

9. Procédé selon la revendication 8, dans lequel l'atmosphère de la seconde étape est l'air ambiant.

10. Procédé selon la revendication 7, dans lequel la durée de l'étape initiale est comprise entre 12 heures et 48 heures.

11. Procédé selon l'une des revendications 5 à 10, dans lequel, à l'issue de la seconde étape, l'étape initiale est répétée.

12. Procédé de traitement de conservation de produits alimentaires végétaux frais comprenant l'étape de placer les produits, à une température positive inférieure à 20°C, dans une enceinte comprenant une paroi semi-perméable et contenant une atmosphère gazeuse constituée initialement de 95 à 100 % de protoxyde d'azote, de 0 à 5 % d'oxygène, le complément éventuel étant constitué d'un gaz inerte.

13. Procédé de traitement de conservation de produits alimentaires végétaux frais comprenant l'étape de placer les produits, à une température positive inférieure à 20°C, dans une enceinte étanche aux gaz contenant un mélange gazeux constitué initialement de 70 % de protoxyde d'azote et de 30 % d'oxygène.

14. Procédé selon l'une des revendications 4, 12 et 13, dans lequel l'enceinte est un emballage individuel.

## Patentansprüche

1. Behandlungsverfahren zur Konservierung von frischen pflanzlichen Lebensmitteln, umfassend einen ersten Schritt, bei dem die Lebensmittel während einer maximalen Dauer von einer Stunde bei kühler Temperatur unter einem Druck zwischen 0,5 und 3 x 10⁵ Pa in einer Gasatmosphäre angeordnet werden, die anfangs 10 bis 100% Argon und zwischen 0 und 50% Sauerstoff enthält, wobei das etwaige Komplement ein inertes Gas ist.

2. Verfahren nach Anspruch 1, bei dem die anfängliche Atmosphäre 2 bis 20% Sauerstoff umfaßt und während der genannten Dauer auf Umgebungsdruck gehalten wird.

3. Verfahren nach Anspruch 2, bei dem die anfängliche Atmosphäre zwischen 50 und 80% Argon und zwischen 15 bis 20% Sauerstoff enthält.

4. Behandlungsverfahren zur Konservierung von frischen pflanzlichen Lebensmitteln, umfassend einen ersten Schritt, bei dem die Lebensmittel bei kühler Temperatur unter einem Druck zwischen 0,5 und 3 x 10⁵ Pa in einer Gasatmosphäre angeordnet werden, die anfänglich wenigstens 95% Stickstoffoxid oder Argon oder ein Gemisch aus beiden enthält, wobei die Lebensmittel bei kühler Temperatur und Umgebungsdruck unter einer derartigen Atmosphäre in einer Verpackung angeordnet und gehalten werden, die eine halbdurchlässige Wand umfaßt.

5. Behandlungsverfahren zur Konservierung von frischen pflanzlichen Lebensmitteln, umfassend einen ersten Schritt, bei dem die Lebensmittel während einer Dauer von einer Stunde bis sieben Tagen bei kühler Temperatur unter einem Druck zwischen 0,5 und 3 x 10⁵ Pa in einer ersten Gasatmosphäre angeordnet werden, die anfänglich 10 bis 100% Stickstoffoxid oder Argon oder ein Gemisch aus beiden enthält und frei von Sauerstoff ist, gefolgt von einem zweiten Schritt, bei dem die Lebensmittel während wenigstens 12 Stunden bei kühler Temperatur in einer zweiten Atmosphäre gehalten werden, die 2 bis 20% Sauerstoff enthält.

6. Verfahren nach Anspruch 5, bei dem die erste Gasatmosphäre 50 bis 100% Stickstoffoxid und/oder Argon enthält.

7. Verfahren nach Anspruch 6, bei dem die erste Gasatmosphäre zumindest 95% Stickstoffoxid und/oder Argon enthält.

8. Verfahren nach Anspruch 7, bei dem die zweite Gasatmosphäre zwischen 10 und 20% Sauerstoff enthält.

9. Verfahren nach Anspruch 8, bei dem die Atmosphäre des zweiten Schritts Umgebungsluft ist.

10. Verfahren nach Anspruch 7, bei dem die Dauer des ersten Schritts zwischen 12 und 48 Stunden beträgt.

11. Verfahren nach einem der Ansprüche 5 bis 10, bei dem der erste Schritt am Ende des zweiten Schritts wiederholt wird.

12. Behandlungsverfahren zur Konservierung von frischen pflanzlichen Lebensmitteln, umfassend den Schritt, die Lebensmittel bei einer positiven Temperatur von weniger als 20°C in einer Umgebung anzuordnen, die eine halbdurchlässige Wand umfaßt und eine Gasatmosphäre enthält, die anfänglich aus 95 bis 100% Stickstoffoxid und 0 bis 5% Sauerstoff gebildet ist, wobei das etwaige Komplement von einem inerten Gas gebildet ist.

13. Behandlungsverfahren zur Konservierung von frischen pflanzlichen Lebensmitteln, umfassend den Schritt, die Lebensmittel bei einer positiven Temperatur von weniger als 20°C in einer gasdichten Umgebung anzuordnen, die ein Gasgemisch enthält, das anfänglich aus 70% Stickstoffoxid und 30% Sauerstoff besteht.

14. Verfahren nach einem der Ansprüche 4, 12 und 13, bei dem die Umgebung eine Einzelverpackung ist.

## Claims

1. Process of treatment for the preservation of fresh plant food products, comprising an initial step in which the products are placed, at refrigerated temperature, under a pressure of between 0.5 and 3 × 10⁵ Pa, in a gaseous atmosphere initially containing 10 to 100 % argon, between 0 and 50 % oxygen, the remainder, where appropriate, being an inert gas, for a period greater than one hour.

2. Process according to Claim 1, in which the initial atmosphere comprises 2 to 20% oxygen and is maintained for the said period, at atmospheric pressure.

3. Process according to Claim 2, in which the initial atmosphere comprises between 50 and 80 % argon and between 15 and 20 % oxygen.

4. Process of treatment for the preservation of fresh plant food products, comprising an initial step in which the products are placed, at refrigerated temperature, under a pressure of between 0.5 and 3 × 10⁵ Pa, in a gaseous atmosphere initially containing at least 95 % nitrous oxide or argon or a mixture of both, the products being placed and maintained at refrigerated temperature and at atmospheric pressure, under such an atmosphere in a packaging comprising a semi-permeable wall.

5. Process of treatment for the preservation of fresh plant food products, comprising an initial step in which the products are placed, at refrigerated temperature, under a pressure of between 0.5 and 3 × 10⁵ Pa, in a first gaseous atmosphere initially containing 10 to 100 % nitrous oxide or argon or a mixture of both, and free of oxygen for a period of one hour to seven days, followed by a second step, in which the products are maintained for at least twelve hours, at refrigerated temperature, in a second atmosphere containing 2 to 20 % oxygen.

6. Process according to Claim 5, in which the first gaseous atmosphere contains 50 to 100 % nitrous oxide and/or argon.

7. Process according to Claim 6, in which the first gaseous atmosphere contains a minimum of 95 % nitrous oxide and/or argon.

8. Process according to Claim 7, in which the second gaseous atmosphere contains between 10 and 20 % oxygen.

9. Process according to Claim 8, in which the atmosphere of the second step is atmospheric air.

10. Process according to Claim 7, in which the duration of the initial step is between 12 hours and 48 hours.

11. Process according to one of Claims 5 to 10, in which, at the end of the second step, the initial step is repeated.

12. Process of treatment for the preservation of fresh plant food products, comprising the step of placing the products, at a positive temperature of less than 20°C, in an enclosure comprising a semi-permeable wall containing a gaseous atmosphere initially consisting of 95 to 100 % nitrous oxide, 0 to 5 % oxygen, the remainder, where appropriate, consisting of an inert gas.

13. Process of treatment for the preservation of fresh plant food products, comprising the step of placing the products, at a positive temperature of less than 20°C, in an airtight enclosure containing a gaseous mixture initially consisting of 70 % nitrous oxide and 30% oxygen.

14. Process according to Claims 4, 12 and 13, in which the enclosure is an individual packaging.
